# EUROPEAN PATENT SPECIFICATION

(11) **EP 4 612 017 B1**
(45) Date of publication and mention of the grant of the patent: **02.12.2026**
(21) Application number: 23798224.4
(22) Date of filing: 27.10.2023
(51) Int. Cl.: B60Q 1/26, B60Q 1/38, B60Q 1/50, F21S 43/14, F21S 43/241, F21S 43/245, F21S 43/20, F21S 43/31, F21S 43/40, F21W 103/25, F21W 104/00

(54) **LIGHTING DEVICE FOR A REAR-VIEW DEVICE OF A VEHICLE**
BELEUCHTUNGSEINRICHTUNG FÜR EINE RÜCKBLICKEINRICHTUNG EINES FAHRZEUGS
DISPOSITIF D'ÉCLAIRAGE POUR UN DISPOSITIF DE RÉTROVISEUR D'UN VÉHICULE

(30) Priority: 01.11.2022 DE 102022128893
(43) Date of publication of application: 10.09.2025
(73) Proprietor: Motherson Innovations Company Limited, London E14 5HU (GB)
(72) Inventor: LIESNER, Alf, 63486 Bruchköbel (DE); GÖTTLICHER, Stefanie, 63486 Bruchköbel (DE); ERNEWEIN, Dominik, 63486 Bruchköbel (DE); SCHMIDT, Oliver, 70327 Stuttgart (DE)
(74) Representative: Weber-Bruls, Dorothée
(86) International application number: PCT/EP2023/080120
(87) International publication number: WO 2024/094573

(56) References cited:
- EP-A1- 3 059 120
- EP-A1- 3 354 517
- EP-A1- 3 616 994
- EP-A1- 3 869 089
- EP-B1- 2 524 841
- DE-A1- 102015 204 347
- KR-A- 20180 070 268

## Description

The invention relates to a lighting device for a rear-view device of a vehicle in line with the claim 1. More particularly, the invention relates to lighting device for emitting a turn light signal and/or a pattern of light from the rear-view device of the vehicle. The invention further relates to a rear-view device with at least one such lighting module and a vehicle with at least one such a rear-view device.

Vehicles generally include rear-view devices mounted inside and outside the vehicle. The rear-view devices generally include one or more mirrors, cameras or any combination thereof for viewing a scenario at least around the rear-end of the vehicle and one or more lighting devices.

The term "vehicle" denotes any motor driven vehicle with or without trailers driven by a driver, where the driver requires information about people, other vehicles or objects in the (near) surrounding of the vehicle to be able to drive safety. As an example, vehicles are cars, trucks, tractors or trailers.

The term "rear-view" is here defined as a view of the surrounding area of a vehicle, which is not in the field of view of a driver of the vehicle, i.e. the directions opposing, left, right, below and above of the viewing direction, but may also comprise the view in the direction of the viewing direction of the driver and/or any combinations of the directions.

The term "driver" and "driver of the vehicle" relates here to the person controlling the main parameters of the vehicle, such as for example direction, speed and/or altitude, e.g. normally the person located in the location specified for the controlling person, for example a seat, but may also relate to any other person or entity within or outside of the vehicle.

The term "light source" denotes a device from which light originates and is emitted. The light source may include one or more light emitting devices or solid-state light sources. The term "solid state" generally refers to light emitted by solid-state electroluminescence, as opposed to incandescent bulbs or fluorescent tubes. For example, the light source may include a semiconductor light emitting diode (LED) or laser diode, an OLED, polymer light emitting diode (PLED), an LED lamp package, LED chip or LED die, or an array of one or more of these devices. It should be understood that the light source may also include a color changing LED, that is the LED may be configured to change color when required.

The term "lightguide" denotes a light conducting element at least partly forming part of a housing, wherein the lightguide has a light receiving surface within an enclosure, which may be provided at least partly by the housing, and a light emitting surface outside the enclosure, such that light emitted from the light source is received by the light receiving surface of the lightguide and directed towards the light emitting surface of the lightguide, such that light is emitted from the lightguide. The lightguide may be made of transparent material. The light may be emitted from the lightguide with a uniform luminance throughout the light emitting surface.

The term "reflective element" denotes a reflective surface on which light, for example emitted from a lightguide, falls and gets reflected in a reflecting direction to emit a reflected light. The reflective element may be a polished or a coated surface providing a mirror-like surface finish.

Different functions and devices may be incorporated into and/or controlled with the help of a rear-view device. Of particular interest are functions and devices to enhance, extend and/or sustain the functionality of the rear-view device during normal or extreme conditions. The respective means may comprise heating and/or cooling means; cleaning means such as wipers, liquid and/or gaseous sprays; actuator means for moving the rear-view device or parts of it, such as for example a display, a camera system and/or parts of a camera system, comprising for example lenses, filters, light sources, adaptive optics like deformable mirrors, sensors and/or mirrors; and/or actuator means for inducing movement of other objects, for example parts of the vehicle and/or objects surrounding the vehicle. Furthermore, linear tracks and/or rotating wheels, like for example a filter wheel, for exchanging optical elements, comprising for example lenses, mirrors, light sources, sensors, adaptive optics like deformable mirrors and/or filters may be comprised.

Prominent examples for functions and devices incorporated into and/or controlled with the help of rear-view devices comprise lighting devices, for example in form of any kind of light module like an external light module, an internal light module, a front light, a back light, a fog light, a brake light, an acceleration light, a turn signal, a logo lamp, a puddle light, a flash light, a navigation light, a position light, an emergency light, a spotlight, a green light, a red light, a warning light, a turn signal light module, an approach light, a search light, an information light, a display and/or any combination thereof.

In recent years, lighting devices for vehicles have become important for their aesthetic appeal to consumers. Thus, vehicle manufacturers have made efforts to design vehicle lighting devices in consideration of the styling of the vehicle on which the lighting devices are mounted. Further, vehicle manufacturers may provide optional lighting effects (in addition to the legally required lighting functionality) to enhance vehicle styling.

It is difficult to provide aesthetically appealing vehicle lighting devices that meet the required technical specifications. For example, taillights on existing cars tend to be power hungry and need various components, such as reflectors. Head lamps are similar in that they require multiple components, such as reflectors, cut off devices and the like. Aesthetic lighting effects lead to an even greater number of components and complexity. Such vehicle lighting devices are not easily adapted to the styling of the vehicle.

Rear-view devices having lighting devices for providing a signal such as a turn signal, warning light, fog light etc. are commonly used in a vehicle. These lighting devices not only enhance or extend the functionality of the rear-view devices, but also provide aesthetic appeal to the vehicle. The lighting devices of the rear-view devices may include a light source such as a light emitting diode (LED) and a lightguide which gets illuminated to provide a signal outside the vehicle. These lighting devices may further be enhanced to emit a pattern of light, which not only provides lighting functionality to the vehicle but also provides aesthetic appeal and enhances styling of the vehicle.

DE 10 2012 211 822 A1 describes a housing element for a lighting unit of a motor vehicle, comprising a housing shell made of thermoplastic material, which specifies an interior space for accommodating a number of light sources of the signal lamp unit and a number of lightguide means assigned to these, the housing shell can be produced by an injection molding process in which a translucent window section is formed, wherein the number of lightguides are obtained in one piece with the housing shell during the injection molding process.

DE 20 2007 016 755 U1 teaches an exterior mirror of a vehicle with a rearward-facing opening in a housing, which surrounds a cavity, in which a mirror can be received, and a forward-facing opening limiting rear wall with an outer surface with a flashing light unit, wherein light is guided in at least two lightguide sections each with a first end and a second end and the at least two lightguide sections are brought together at one of their ends in a node, which forms a light decoupling area.

EP 3 869 089 A1 refers to a vehicular apparatus comprising: a housing that is configured to be attached to a vehicle; and first and second light sources that are provided in the housing to emit light having main wavelengths in mutually different wavelength ranges, wherein the first light source emits light having a main wavelength in 490 nm - 498 nm while the vehicle is being automatically driven. The first light source emit light into a first light conductor which has one end surface, which is a light incidence surface, the other end surface, and a circumferential surface, which connects these two end surfaces. The first light conductor is arranged such that the light incidence surface of the first light conductor is positioned outward in the vehicle width direction, and the other end surface is positioned inward in the vehicle width direction. The first light source is provided to face the light incidence surface. A reflecting structure is formed in the part of the circumferential surface of the first light conductor opposite to an output surface that faces a translucent cover.

KR 2018 0070268 A teaches a side-view type repeater, which is installed in an outside mirror of a vehicle and comprises: a housing that forms an outer appearance of the outside mirror; an opening portion formed in the housing in front of the vehicle; a first lens unit formed in the opening portion to expose a lens; and a second lens unit connected to an upper portion of the first lens unit and covered by the housing, wherein the first light source unit of the first lens unit and the second light source unit of the second lens unit are formed to be covered by the housing, at one side of the opening.

DE 10 2015 204 347 A1 describes a lamp for a vehicle, comprising: a mirror housing accommodating a mirror therein; and a signal lamp mounted on a portion of an outer surface of the mirror housing and configured to form a repeating image having a predetermined pattern, the signal lamp comprising: a reflection unit having a metal coating layer formed on a surface thereof; a lens unit arranged on the front side of the reflection unit and comprising a half mirror formed on at least a portion of a surface of the lens unit, and a light source unit arranged between the reflection unit and the lens unit and comprising one or more light sources and a lightguide arranged between the metal coating layer and the half mirror, wherein the repeat image comprises an original image of the lightguide and one or more reflections of the original image, and wherein a position of the light source unit is changed depending on an installation location of the signal lamp relative to a curved portion of the mirror housing.

EP 3 059 120 A1 refers to a lighting device for a motor vehicle, which comprises: a wall comprising at least one protrusion; and at least one first light source located inside said protrusion; wherein the wall comprises a reflective zone having light reflection properties and is arranged opposite the first light source, such that the first light source is capable of generating a light beam passing through the wall, propagating outside the lighting device before being reflected on the reflective zone of the wall to generate apparent lighting from the wall.

EP 2 524 841 B1 describes a vehicle lighting unit such as a vehicle signal light configured such that an observer cannot visually recognize a light source, and a light guide through an outer lens and can suppress the brightness unevenness of the emission light. The vehicle signal light can project light outwardly through an opening portion formed in a mirror housing of a sideview mirror along a vehicle length direction and near an outer side of the sideview mirror in a vehicle width direction. The vehicle signal light can include: a housing provided inside the mirror housing, an outer lens assembled with the housing inside the mirror housing so as to close the opening portion, a light source disposed in a lighting chamber at a position shifted from the position of the opening portion in one vertical direction, and a light guide disposed in the lighting chamber while shifted from the position of the opening portion toward the light source so as to convert the light emitted from the light source to downward surface-shaped emission light. In this vehicle signal light, a diffusing and reflecting surface configured to diffuse and reflect light projected from the light exiting surface of the light guide can be formed in part of an inner surface of the housing below the light guide.

It is an object of the present invention to further develop the known lighting device for a rear-view device of a vehicle to overcome the drawbacks of the prior art. In particular it is the object to enhance the aesthetic appeal and styling of the known lighting devices for rear-view devices of motor vehicles.

This object is achieved by features of claim 1. Preferred embodiments of the lighting device of the present disclosure are described in claims 2 to 9.

Thus, a lighting device for a rear-view device of a vehicle is provided, which comprises a housing having an upper portion and a lower portion, in particular made of opaque material; at least one light source disposed within the housing; at least one lightguide at least partially disposed within the housing and having a first end and a second end, wherein the at least one light source is located at one of the first end and/or the second end of the at least one lightguide, and wherein the at least one lightguide is configured to transmit light from the first end to the second end of the at least one lightguide, and wherein the at least one lightguide has at least one light receiving surface and at least one light emitting surface; and a reflective element disposed on at least one portion of at least one of the housing, in particular on a structural element of the housing, and the at least one lightguide, in particular on a back side of the lightguide facing away from at least one light emitting surface, for reflecting a portion of light from the at least one lightguide, wherein either the at least one lightguide has a first arm and a second arm connected to the first arm at an angle forming a substantially 7-shaped cross section and defining a recess, or a covering element, which is disposed between the upper portion and the lower portion of the housing to allows the light coming from the at least one lightguide to exit the lighting device, has a first arm and a second arm connected to the first arm at an angle forming a substantially 7-shaped cross section and defining a recess, and the first arm or extends substantially horizontally when the rear-view device is mounted to the vehicle.

Embodiments are characterized in that the first arm of the at least one lightguide is configured to emit light directly towards the outside of the lighting device, by providing a first light emitting surface, and towards the reflective element, by providing a second light emitting surface, and the second arm is configured to allow reflected light from the reflective element to pass through.

Further, it is proposed that the at least one light source is configured at the first arm of the at least one lightguide, in particular at the at least one light receiving surface of the at least one lightguide being substantially perpendicular to the first light emitting surface and/or the second light emitting surface.

Said embodiments are further characterized in that the first arm and the second arm of the at least one lightguide are configured to face outside the lighting device.

Other embodiments are characterized in that the first arm of the covering element is disposed behind the housing and the second arm of the covering element is configured to face outside the lighting device.

Still further, it is proposed that the at least one lightguide has a square or rectangular cross section, and/or the at least one lightguide is arranged behind a further covering element.

It is also proposed that the second arm of the covering element has an extended portion for supporting the covering element within the housing.

With the present invention it is also proposed that the housing further comprises a lightguide supporting element for replaceably mounting the at least one lightguide within the housing. In this respect it can also be that the at least one lightguide, in particular the first arm of the at least one lightguide, is arranged between on the one side the upper portion of the housing and/or the covering element or the further covering element and on the other side the supporting element.

In addition, embodiments of the present invention can be defined in that the reflective element comprises or is provided with a pattern generating element for emitting light in the form of a pattern, logo, symbol, icon, text or combination thereof, and/or the covering element or the further covering element comprises or is provided with a pattern generating element for emitting light in the form of a pattern, logo, symbol, icon, text or combination thereof.

For those embodiments it might be that the pattern generating element comprises at least one of a laser printed portion, a cut-out, a masked portion, molded, etched, painted or printed 2D or 3D shapes for making a pattern, logo, symbol, icon or text.

It is also proposed that the at least one light source comprises a colour changing light source and/or cooperates with a colour changing element, and/ or the at least one light source is switchable between an on and an off state.

The lighting device of the present invention has an advantage that one or more layers or edges of light may be emitted from the lighting device by using at least one light source. This is possible since a first portion of light may be directly emitted from the lightguide, emitting a first layer/edge of light, and/or a second portion of light is reflected from a reflective element, emitting a second layer/edge of light. Thus, the lighting device of the present invention may provide the functionality of a turn light signal as well as enhances the aesthetic appeal of the vehicle. Various embodiments of the lighting devices are possible such as the lighting device may emit only one layer/edge of light by having only a portion of light to be emitted from the lightguide either directly from the lightguide or reflected from the reflective element. In other embodiment the lighting device may emit two layers/edges of light by having a portion of light to be emitted from the lightguide directly and a portion of light to be reflected from the reflective element.

In an embodiment, the at least one lightguide has a first arm and a second arm connected to the first arm at an angle forming a recess, wherein the first arm is configured to emit light directly towards the outside of the lighting device and towards the reflective element, and the second arm is configured to allow reflected light from the reflective element to pass through. The advantage of such a design of the at least one lightguide with a 7-shaped cross-section is that it provides two layers/edges of light to be emitted from the lighting device. The first layer/edge of light from the first arm directly and the second layer/edge of the light from the second arm, which allows reflected light from the reflective element to pass through.

In an embodiment, the at least one light source is configured at the first arm of the at least one lightguide. This configuration allows the light to enter the first arm of the at least one lightguide and the light gets uniformly distributed throughout the entire span of the first arm of the at least one lightguide. Thus, the first arm of the at least one lightguide glows uniformly and emits light directly towards the outside of the lighting device and/or towards the reflective element.

In an embodiment, the first arm and the second arm of the at least one lightguide are configured to face outside the lighting device. In this configuration two layers/edges of light may be emitted from the lighting device. The first layer/edge of light is emitted from the first arm of the at least one lightguide directly, and the second layer/edge of light is emitted from the second arm of the at least one lightguide.

In an embodiment, the housing further comprises a lightguide supporting element for replaceably mounting the at least one lightguide within the housing. The lightguide supporting element may be a part of the housing and may be enclosed within the housing. The lightguide supporting element is configured to fix the at least one lightguide within the housing.

In an embodiment, the at least one lightguide is mounted on the lightguide supporting element via at least one of a screw, nut, adhesive, plug-in connection, form-fit connection, butt strap joint and clamping connection.

In an embodiment, the lighting device further comprises a covering element disposed between the upper portion and the lower portion of the housing, wherein the covering element allows the light coming from the at least one lightguide to exit the lighting device. The advantage of having the covering element is that the covering element provides sealing to the lighting device and protect the lighting device from dust, dirt, moisture etc. The covering element can be in form of a transparent lens. In other embodiment, the lighting device may not have the covering element and in such an embodiment the at least one lightguide is disposed between the upper portion and the lower portion of the housing for providing the sealing to the lighting device and protect the lighting device from dust, dirt, moisture etc.

In an embodiment, the reflective element has a pattern generating element for emitting light in the form of a pattern, logo, symbol, icon, text or combination thereof. The advantage of having such a pattern generating element in the reflective element is that light may be emitted in the form of pattern, logo, symbol, icon, text or combination thereof, thus enhancing the aesthetic appeal and /or the functionality of the lighting device. For example, a warning message in the form of text or symbol may be displayed from the lighting device by using such a pattern generating element.

In an embodiment, the pattern generating element comprises at least one of a laser printed portion, a cut-out, a masked portion, molded, etched, painted or printed 2D or 3D shapes for making a pattern, logo, symbol, icon or text.

In an embodiment, the at least one lightguide has a square or rectangular cross section. The advantage of having such a design of the at least one lightguide is that the at least one lightguide may be easily fitted within the housing.

In an embodiment, the covering element has a first arm and a second arm connected to the first arm at an angle, wherein the second arm of the covering element has an extended portion for supporting the covering element within the housing. The advantage of having such a design of the covering element is that the covering element is rigidly fixed with the housing.

The present invention also provides a rear-view device comprising at least one lighting device according to the present invention. The rear-view device may further comprise a control unit for controlling the lighting device, in particular the at least one light source of the lighting device.

The present invention also provides a vehicle comprising at least one rear-view device comprising at least one lighting device according to the present invention.

Other aspects, advantages, and salient features of the present invention will become apparent to those skilled in the art from the following detailed description, which taken in conjunction with the annexed figures, discloses exemplary embodiments of the invention, wherein:
- Fig. 1:: illustrates an outside view of a rear-view device of a vehicle with a lighting device according to an embodiment of the present invention;
- Fig. 2:: illustrates a front view of a front portion of the rear-view device of Fig. 1 showing the lighting device according to an embodiment of the present invention;
- Fig. 3a, 3b and 3c:: illustrate sectional views along section line A-A of the lighting device of Fig. 2 with three different embodiments of the lighting device according to the present invention;
- Fig. 4: illustrates a sectional view along section line B-B of the lighting device of Fig. 2 according to the present invention;
- Fig. 5a and 5b:: illustrate outside views of a rear-view device of a vehicle describing further features of the lighting device;
- Fig. 6:: illustrates a sectional view of the lighting device of Fig. 5b along section line C-C according to an embodiment not belonging to the present invention;
- Fig. 7a and 7b:: illustrate outside views of a rear-view device of a vehicle showing further lighting devices according to embodiments of the present invention;
- Fig. 8: illustrates a sectional view of the lighting device of Fig. 7a along section line D-D according to the present invention;
- Fig. 9a and 9b:: illustrate outside views of a rear-view device of a vehicle describing further features of the lighting device according to an embodiment of the present invention;
- Fig. 10: illustrates a sectional view of the lighting device of Fig. 9a along section line E-E according to the present invention; and
- Fig. 11: illustrates a front view of a vehicle showing the rear-view device and the lighting device according to the present invention.

It is to be understood that the embodiments described are merely exemplary of the present invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention. The present invention is limited only by the appended claims.

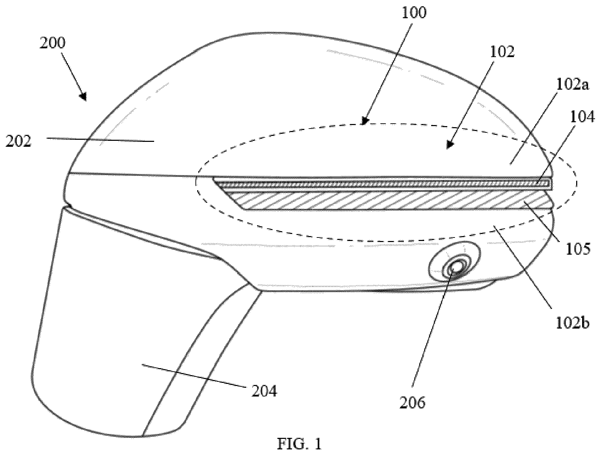

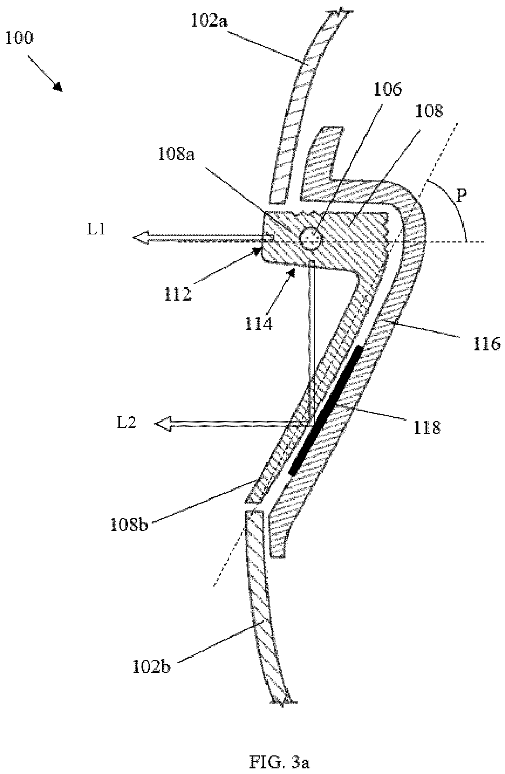

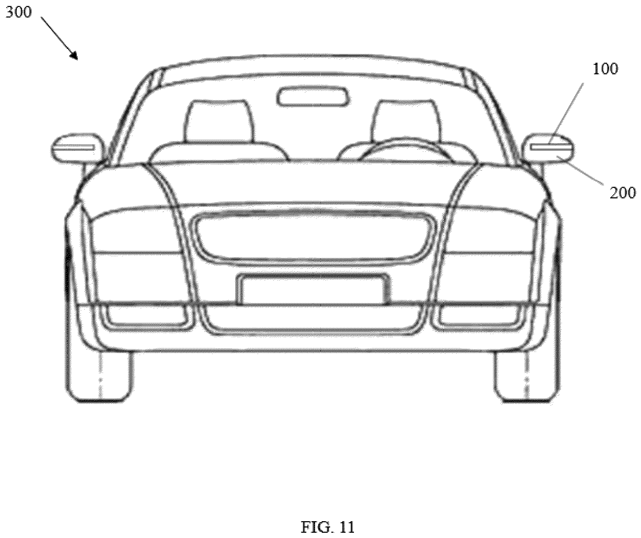

Fig. 1 illustrates an outside view of a rear-view device 200 of a vehicle 300, which is shown in Fig. 11. The rear-view device 200 comprises a head portion 202 and a base portion 204. The rear-view device 200 may be mounted on the vehicle 300 on left side and right side of the vehicle 300 via the base portion 204. The base portion 204 may be mounted on door, window triangle or body of the vehicle. The base portion 204 may have various configurations and designs based on the mounting location. The rear-view device 200 is configured to view the surrounding of the vehicle 300, particularly the rear view. The rear-view device 200 may comprise a mirror (not shown). The rear-view device 200 may also comprise at least one camera 206 for enhancing the view of the vehicle environment. The rear-view device 200 also comprise a lighting device 100. The lighting device 100 may be used to provide at least one of a turn light signal, warning signal, breakdown signal, coming-home signal, autonomous driving mode signal, battery charging signal, low battery signal, welcome signal, and parking signal. In addition to providing said signals, the lighting device 100 may also enhance the aesthetic appeal to the vehicle 300. In the illustrated embodiment in Fig. 1, a first light portion 104 in the form of a layer or edge and a second light portion 105 in the form of a layer or edge are provided by the lighting device 100. The first light portion 104 and the second light portion 105 are shown in different hatching lines in Fig. 1. The output of light in two layers/edges enhances the aesthetic appeal and styling of the vehicle 300. The lighting device 100 comprises a housing 102. The housing 102 may be the outer portion of the rear-view device 200. The housing 102 may be made of an opaque material such as plastics, metals, 3D print, Carbon fibre or any other synthetic or natural materials. The housing 102 comprises an upper housing portion 102a and a lower housing portion 102b, see also Figs. 3a to 3c. The upper housing portion 102a and/or the lower housing portion 102b has a cutout which allows the light from the lighting device 100 to be exited from the rear-view device 200.

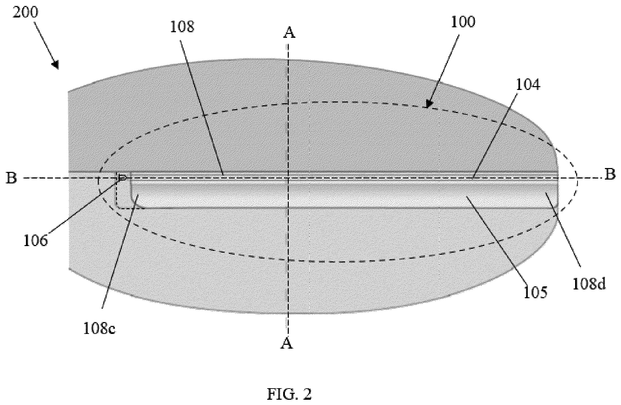

Fig. 2 shows a front portion of the rear-view device 200 illustrating the lighting device 100. The lighting device 100 comprises at least one light source 106 disposed behind the housing 102 such that the at least one light source 106 is not visible from the outside. In Fig. 2, the portion behind the housing 102 is shown in dashed line to illustrate the position and arrangement of the at least one light source 106 within the housing 102. The at least one light source 106 may include a semiconductor light emitting diode (LED) or laser diode, an OLED, polymer light emitting diode (PLED), an LED lamp package, LED chip or LED die, or an array of one or more of these devices. The at least one light source 106 may include a colour changing LED to obtain various colour outputs through one LED. In an embodiment, a colour changing LED is used as the at least one light source. The advantage of using a colour changing LED as a light source is that multiple colour light may be emitted from the lighting device for fulfilling different functionalities and/or enhancing aesthetic appeal of the vehicle. For example, to emit a turn light signal the LED may be switched to the yellow colour, to emit a coming home signal the LED may be switched to the blue colour, or to emit a warning signal the LED may be switched to the red colour.

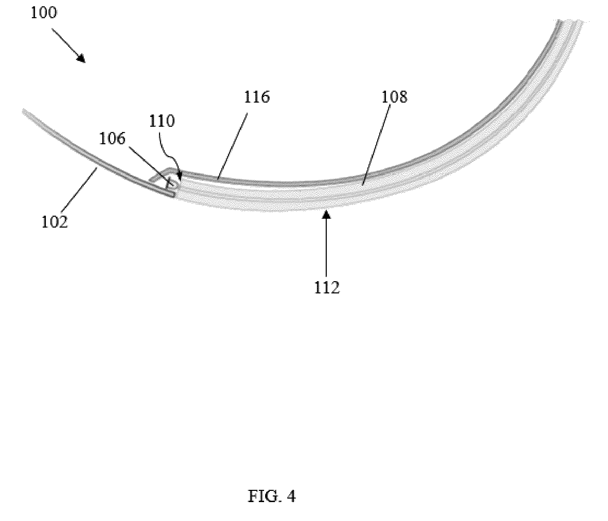

The lighting device 100 further comprises at least one lightguide 108. The at least one lightguide 108 has a first end 108c and a second end 108d. The at least light source 106 is arranged adj acent to the first end 108c and/or the second end 108d of the at least one lightguide 108. In the illustrated embodiment, the at least one light source 106 is arranged adjacent to the first end 108c of the at least one lightguide 108. However, it is to be understood that the at least one light source 106 may be arranged at any location throughout the length of the at least one lightguide 108. The at least one lightguide is made of transparent material such as polymethyl methacrylate (PMMA), Polycarbonates (PC), Polyvinyl Chloride (PVC), Polystyrene (PS) and Poly(p-phenylene oxide) (PPO). The at least one lightguide 108 is configured to receive light from the at least one light source 106 and direct the light throughout the entire length of the at least one lightguide 108 such that the at least one lightguide 108 glows uniformly throughout the length. The at least one lightguide 108 has at least one light receiving surface 110 as shown in Fig. 4 and at least one light emitting surface 112, 114 a shown in Figs. 3a-3c.

Figs. 3a illustrates a sectional view of the of the lighting device 100 along the section line A-A shown in Fig. 2. As shown in the figure, the at least one lightguide 108 is disposed in a gap between the upper housing portion 102a and the lower housing portion 102b. The at least one lightguide 108 has a first arm 108a and a second arm 108b connected to the first arm 108a at an angle P, forming a 7-shaped cross-section and, thus, a recess for providing a space between the two arms 108a, 108b. The angle P between the first arm 108a and the second arm 108b may vary between a range of 1° and 179°. Thickness of the two arms 108a and 108b may be identical or different. The first arm 108a and the second arm 108b may be made in a single unit. Alternatively, the first arm 108a and the second arm 108b may be made separately and joined together by means of gluing or adhesive. In the embodiment shown in Fig. 3a, the first arm 108a and the second arm 108b of the at least one lightguide 108 are configured to face outside the lighting device 100. That is to say, both the first arm 108a and the second arm 108b are configured to emit light outside the lighting device 100 into the exterior of the rear-view device 200, see the light beam L1 and L2, respectively.

The at least one lightguide 108 is replaceably mounted on or to the housing 102 via a lightguide supporting element 116. The lightguide supporting element 116 is a part of the housing 102 that is configured to support and fix the at least one lightguide 108. The at least one lightguide 108 is mounted on the lightguide supporting element 116 via at least one of a screw, nut and adhesive, plug connection, form-fit connection, butt strap joint and clamping connection (not shown).

The at least one light receiving surface 110 of the at least one lightguide 108 is configured to receive light from the at least one light source 106 and the at least one light emitting surface 112, 114 of the at least one lightguide 108 is configured to emit light outside the at least one lightguide 108 as shown in Figs. 3a and 4. In the illustrated embodiment the at least one light source 106 is located adjacent to the first arm 108a of the at least one lightguide 108, see Fig. 4. Thus, the first arm 108a of the at least one lightguide 108 may be configured to receive light from the at least one light source 106 and the second arm 108b may not receive light directly from the at least one light source 106. The first arm 108a of the at least one lightguide 108 may have one light receiving surface 110 (shown in Fig. 4) and two light emitting surfaces 112 and 114 (shown in Fig. 3a). A first light emitting surface 112 of the first arm 108a emits light directly to the outside of the lighting device 100, that is in the substantial horizontal direction, see the first light beam L1 in Fig. 3a. The second light emitting surface 114 of the first arm 108a emits light towards a reflective element 118, that is in a substantial vertical direction to be reflected also in the substantial horizontal direction, see the second light beam L2 in Fig. 3a.

The reflective element 118 may be disposed on the housing 102 such that the reflective element 118 is configured to face the second arm 108b of the at least one lightguide 108. More particularly, the reflective element 118 may be disposed on the lightguide supporting element 116. Therefore, the light emitted from the second light emitting surface 114 of the first arm 108a of the lightguide 108 falls on the reflective element 118. The reflective element 118 is configured to direct light towards the outside of the lighting device 100. The second arm 108b of the at least one lightguide 108, having a transparent body, is configured to allow light coming from the reflective element 118 to pass through. Thus, two light portions 104, 105 are provided for light exiting from the lighting device 100 in form of the two light beams L1 and L2. The first light portion 104 is directly associated with the first light emitting surface 112 of the first arm 108a of the at least one lightguide 108, as illustrated with the first light beam L1, and the second light portion 105 is indirectly associated with the second light emitting surface 114 of the first arm 108a of the at least one lightguide 108 as the second light beam L2 being reflected by the reflective element 118 and passing through the second arm 108b of the at least one lightguide 108.

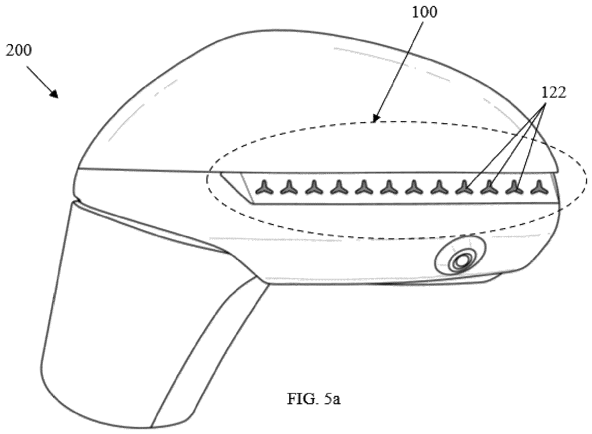

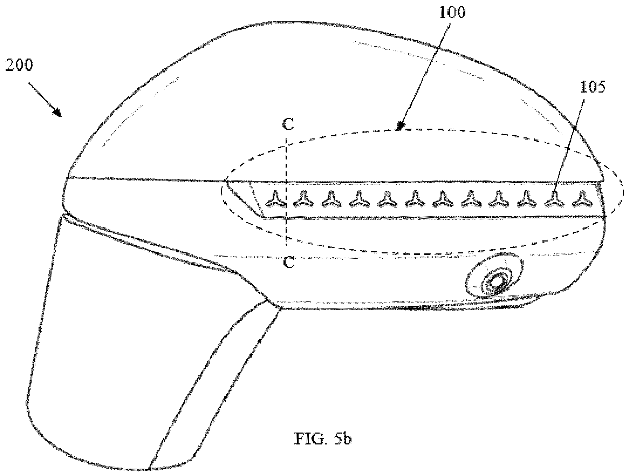

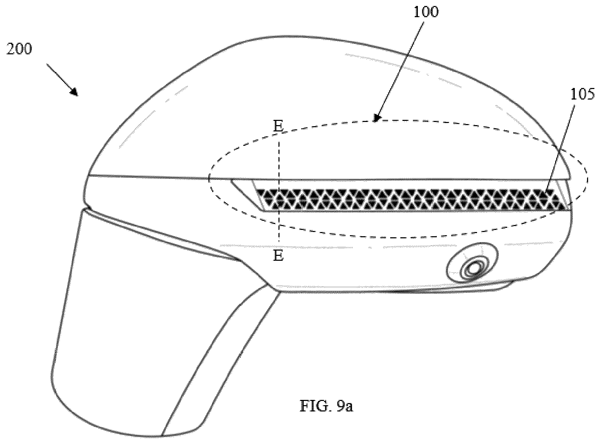

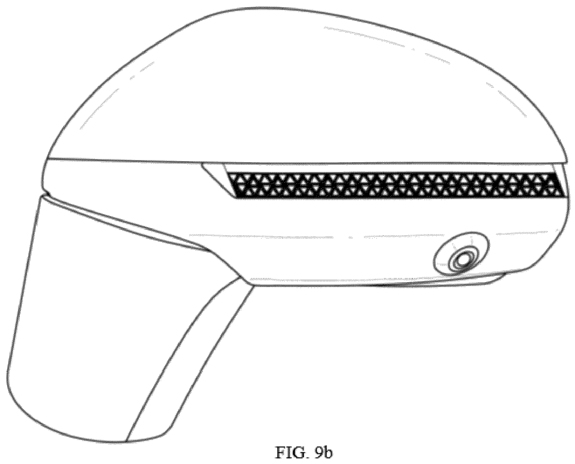

The reflective element 118 may further comprise a pattern generating element for emitting light in the form of a pattern, logo, symbol, icon, text or combination thereof. Embodiments of such light outputs in the form of patterns are shown in Figs. 5a, 5b, 9a and 9b. In these embodiments the respective reflective element 118 includes a pattern generating element such that when light falls on the reflective element 118 having the pattern generating element, the reflected light is emitted in the form of the pattern logo, symbol, icon, text or combination thereof. The pattern generating element may include at least one of a laser printed portion, a cut-out, a masked portion, molded, etched, painted, printed 2D or 3D shapes for making a pattern, logo, symbol, icon or text.

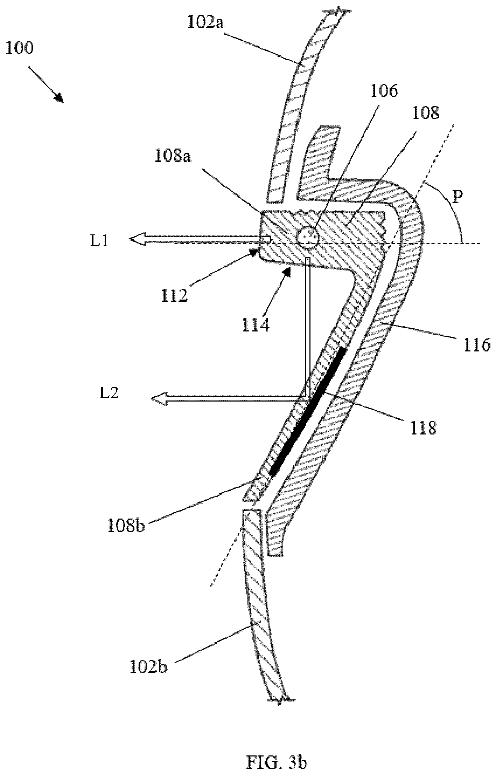

Fig. 3b illustrates a sectional view of the lighting device 100 according to another embodiment of the present invention. This embodiment is similar to the embodiment shown in Fig. 3a except for the arrangement of the reflective element 118. In this embodiment the reflective element 118 is disposed on the back side of the second arm 108b of the at least one lightguide 108 such that light emitted from the light emitting surface 114 of the first arm 108a of the at least one lightguide 108 falls on the reflective element 118 disposed on back side of the second arm 108b of the at least one lightguide 108, gets reflected and passes through the transparent body of the second arm 108b of the at least one lightguide 108.

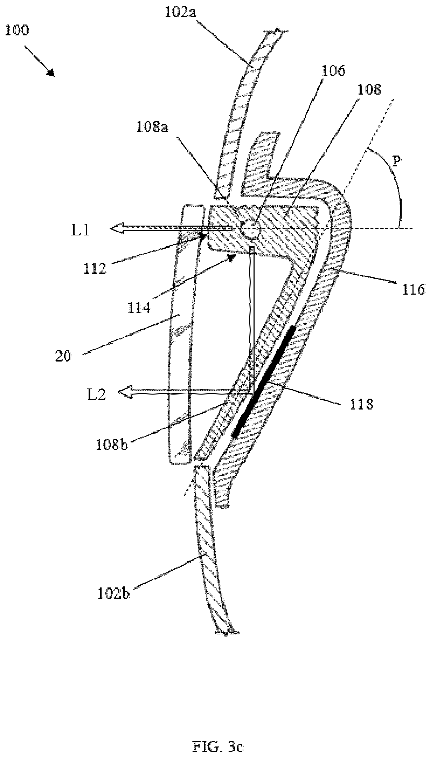

Fig. 3c illustrates a sectional view of the of the lighting device 100 according to a further embodiment of the present invention. This embodiment is similar to the embodiment shown in Fig. 3a except for an addition part which is discussed herein. The lighting device 100 may comprise a covering element 120 disposed between the upper portion 102a and the lower portion 102b of the housing 102. The covering element 120 allows the light coming from the at least one lightguide 108 to exit the lighting device 100. The covering element 120 may be made of transparent material and act as a lens. The advantage of having the covering element 120 is that the covering element 120 provides sealing to the lighting device 100 and protects the lighting device 100 from dust, dirt, moisture etc. In the embodiments shown in Figs. 3a and 3b, the lighting device 100 may not have the covering element, and in such embodiment the at least one lightguide 108 is disposed between the upper portion 102a and the lower portion 102b of the housing 102 for providing the sealing to the lighting device 100 and protect the lighting device 100 from dust, dirt, moisture etc.

Fig. 4 shows a sectional view of the of the lighting device 100 along the section line B-B shown in Fig. 2 to illustrate the arrangement of the at least one light source 106, the at least one lightguide 108 and the housing 102. As illustrated in the figure, the at least one light source 106 is disposed behind the housing 102 such that the at least one light source 106 is not visible from outside. The light receiving surface 110 of the at least one lightguide 108 is configured to receive the light from the at least one light source 106 and direct the light towards the entire length of the at least one lightguide 108. The lightguide supporting element 116 is also shown in Fig. 4.

The above embodiments shown in Figs 1-4 have two layers/edges of light to exit the lighting device 100. However, other embodiments of lighting device 100 may only have one light portion. One such embodiment is shown in Figs. 5a and 5b.

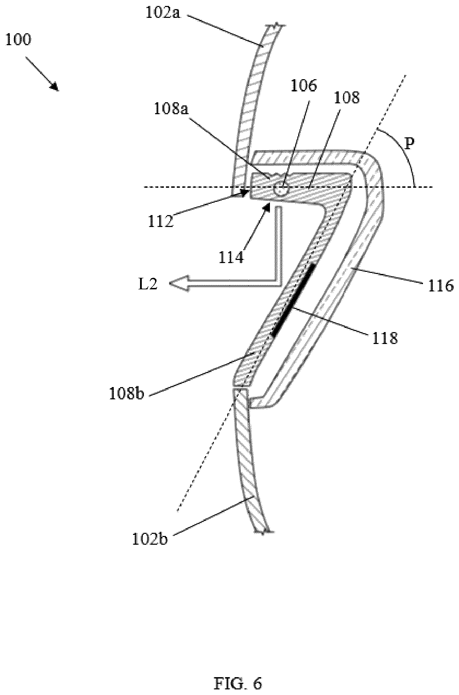

Figs. 5a and 5b illustrate outside views of the rear-view device 200 of a vehicle 300 according to an embodiment. Fig. 5a illustrates the lighting device 100 in a switched off state, and Fig. 5b illustrates the lighting device 100 in a switched on state. In this embodiment, the lighting device 100 emits light only within one light portion, but in the form of a pattern. In this embodiment, the reflective element 118 comprises the pattern generating element 122 such that the second light portion 105 is providing the pattern of light emitted from the lighting device 100. In Fig. 5a, the pattern generating element 122 may be visible from outside the rear-view device 200 even when the lighting device 100 is in the switched off state since the at least one lightguide 108 is transparent, Thus, making the pattern generating element 122 visible from outside. In Fig. 5b, the second light portion 105 of light is emitted from the lighting device 100 in the form of pattern. This embodiment is further described in Fig. 6.

Fig. 6 illustrates a sectional view of the lighting device 100 along the section line C-C in Fig. 5b. This embodiment is similar to the embodiment of Fig. 3b except for the position of the at least one lightguide 108 and the pattern generating element 122. In this embodiment, which is not belonging to the present invention, the light emitted from the at least one lightguide 108 is restricted to one direction and, thus, to only one light beam L2. The first arm 108a of the at least one lightguide is disposed behind the upper portion 102a of the housing 102 such that the first light emitting surface 112 of the first arm 108a is masked by the opaque housing 102, and, thus, the second light emitting surface 114 is configured to emit light towards the reflective element 118 disposed on the backside of the second arm 108b of the at least one lightguide 108. The second arm 108b of the at least one lightguide 108 is configured to face outside the lighting device 100. That is to say, the second arm 108b is configured to emit light outside the lighting device 100. The reflective element 118 comprises the pattern generating element 122 (shown in Fig. 5a) for providing the second light portion 105 with a light pattern. The pattern generating element 122 may include at least one of a laser printed portion, a cut-out, a masked portion, molded, etched, painted or printed 2D or 3D shapes.

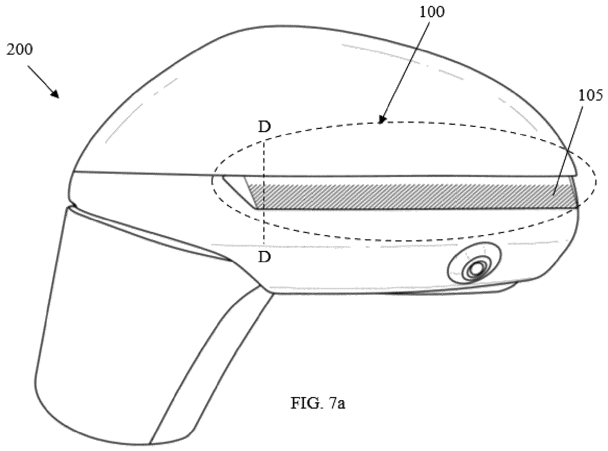

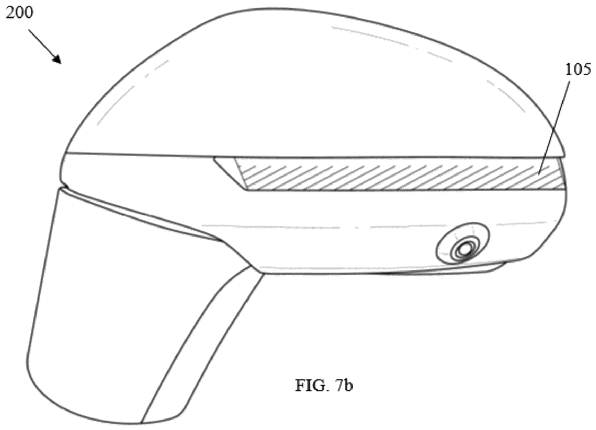

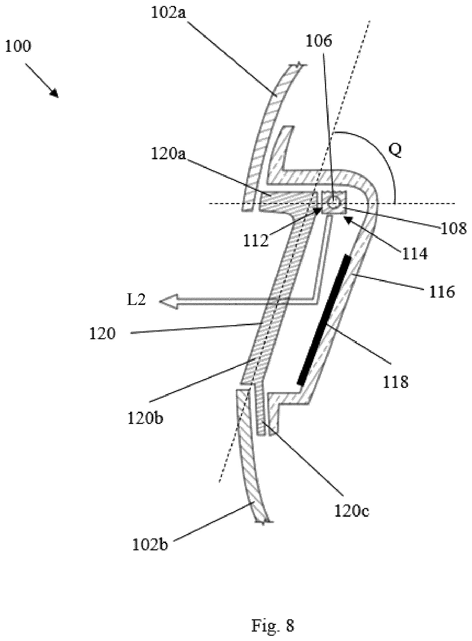

Figs. 7a and 7b illustrate outside views of the rear-view device 200 of a vehicle 300 according to a still further embodiment of the present invention. Fig. 7a illustrates the lighting device 100 showing a light output at the second light portion 105 in a first colour, and Fig. 7b the lighting device 100 showing a light output at the second light portion 105 in a second colour. This is possible by using a colour changing LED as the at least one light source 106. Different colours may indicate different functionalities of the lighting device 100. For example, the yellow colour may indicate turn signal, the blue colour may indicate home coming signal, and the red colour may indicate warning / breakdown signal as already mentioned above. The lighting device 100 may change the colour based on a predefined algorithm based on the state of the vehicle and may be controlled by a control unit or manually by the driver. For example, on receiving a turn signal from the driver, the lighting device 100 may emit the yellow colour, and in case of vehicle breakdown, the lighting device 100 may change the colour to red. This embodiment is further described in Fig. 8 .

Fig. 8 illustrates a sectional view of the lighting device 100 along the section line D-D in Fig. 7a. In this embodiment, the at least one lightguide 108 has a substantial square cross section. In another embodiment, the at least one lightguide may have a substantial rectangular cross section. The lighting device 100 comprises the covering element 120. The covering element 120 has a first arm 120a and a second arm 120b connected to the first arm 120a at an angle Q. The angle Q between the first arm 120a and the second arm 120b may vary between a range of 1° and 179°. Thickness of the two arms 120a and 120b may be identical or different. The first arm 120a and the second arm 120b may be made in a single unit. The at least one lightguide 108 is disposed behind the first arm 120a of the covering element 120, and the first arm 120a of the covering element 120 is disposed behind the upper portion 102a of the housing 102. Thus, the second light emitting surface 114 of the at least one lightguide 108 is configured to emit light towards the reflective element 118 provided on the supporting element. The reflective element 118 reflects the light towards the second arm 120b of the covering element 120, see the light beam L2 in Fig. 8. The covering element 120, being transparent, allows the reflected light to exit the lighting device 100. Thus, the lighting device 100 is configured to emit the second light portion 105 of light by disposing the at least one lightguide 108 behind the housing 102 such that a direct light from the lightguide 108 is restricted by the housing 102.

The covering element 120 further comprises an extended portion 120c for supporting the covering element within the housing 120. The extended portion 120c is disposed between the lower housing portion 102b and the lightguide supporting element 116. This configuration of the covering element 120 rigidly disposes the covering element 120 within the housing.

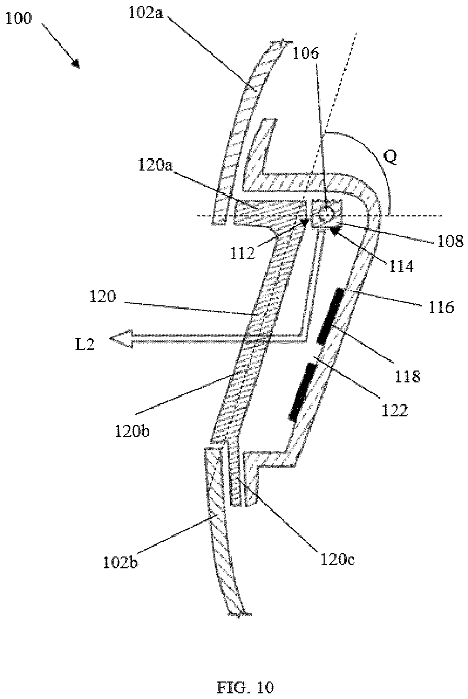

Figs. 9a and 9b illustrate outside views of the rear-view device 200 of a vehicle 300 according to an additional embodiment of the present invention. Fig. 9a illustrates the lighting device 100 showing a light output through the second light portion 105 in a pattern, and Fig. 9b the lighting device 100 showing a light output through the second light portion 105 in a second pattern. The lighting device 100 of this embodiment is similar to the embodiment of Figs. 7a, 7b and 8 except for the reflective element 118 of this embodiment comprising a pattern generating element 122 as shown in Fig. 10.

Fig. 10 illustrates a sectional view of the lighting device 100 along the section line E-E in Fig. 9a. As shown in Fig. 10, the reflective element 118 comprises the pattern generating element 122 for emitting the light in the form of a pattern. The pattern generating element 122 may comprise at least one of a laser printed portion, a cut-out, a masked portion, molded 2D or 3D shapes for making a pattern, logo, symbol, icon or text. Various combination of patterns, logo, text, symbols are possible by having various pattern generating element 122 on the reflective element 118.

Fig. 11 illustrates a front view of the vehicle 300 showing the rear-view device 200 and the lighting device 100 according to the present The lighting device 100 may be disposed on the rear-view device 200. The vehicle 300 may comprise two rear-view devices, one on the left side and the other on the right side of the vehicle 300.

### Reference Signs

- 100:: lighting device
- 102:: housing
- 102a:: upper portion of housing
- 102b:: lower portion of housing
- 104:: first light portion of light
- 105:: second light portion of light
- 106:: at least one light source
- 108:: at least one lightguide
- 108a:: first arm of at least one lightguide
- 108b:: second arm of at least one lightguide
- 108c:: first end of at least one lightguide
- 108d:: second end of at least one lightguide
- 110:: light receiving surface of at least one lightguide
- 112:: light emitting surface of at least one lightguide
- 114:: light emitting surface of at least one lightguide
- 116:: lightguide supporting element
- 118:: reflective element
- 120:: covering element
- 120a:: first arm of covering element
- 120b:: second arm of covering element
- 120c:: extended portion of covering element
- 122:: pattern generating element
- 200:: rear-view device
- 202:: head portion of rear-view device
- 204:: base portion of rear-view device
- 300:: vehicle
- P:: angle between first arm and second arm of at least one lightguide
- Q:: angle between first arm and second arm of covering element
- A-A:: section line of Fig. 2
- B-B:: section line of Fig. 2
- C-C:: section line of Fig. 5b
- D-D:: section line of Fig. 7a
- E-E:: section line of Fig. 9a
- L1: light beam
- L2: light beam

## Claims

1. A lighting device (100) for a rear-view device (200) of a vehicle (300) comprising:
• a housing (102) having an upper portion (102a) and a lower portion (102b), in particular made of opaque material;
• at least one light source (106) disposed within the housing (102);
• at least one lightguide (108) at least partially disposed within the housing (102) and having a first end (108c) and a second end (108d), wherein the at least one light source (106) is located at one of the first end (108c) and/or the second end (108d) of the at least one lightguide (108), and wherein the at least one lightguide (108) is configured to transmit light from the first end (108c) to the second end (108d) of the at least one lightguide (108), and wherein the at least one lightguide (108) has at least one light receiving surface (110) and at least one light emitting surface (112, 114); and
• a reflective element (118) disposed on at least one portion of at least one of the housing (102) and the at least one lightguide (108) for reflecting a portion of light from the at least one lightguide (108),
wherein
• either the at least one lightguide (108) has a first arm (108a) and a second arm (108b) connected to the first arm (108a) at an angle (P) forming a substantially 7-shaped cross section and defining a recess, wherein
∘ the first arm (108a) of the at least one lightguide (108) extends substantially horizontally when the rear-view device (200) is mounted to the vehicle (300), and
∘ the first arm (108a) and the second arm (108b) of the at least one lightguide (108) are configured to face outside the lighting device (100), such that
▪ the first arm (108a) of the at least one lightguide (108) is configured to emit light directly towards the outside of the lighting device (100) by providing a first light emitting surface (112), and towards the reflective element (118) by providing a second light emitting surface (114), and
▪ the second arm (108b) is configured to allow reflected light from the reflective element (118) to pass through,
• or a covering element (120), which is disposed between the upper portion (102a) and the lower portion (102b) of the housing (102) to allow the light coming from the at least one lightguide (108) to exit the lighting device (100), has a first arm (120a) and a second arm (120b) connected to the first arm (120a) at an angle (Q) forming a substantially 7-shaped cross section and defining a recess, wherein
∘ the first arm (120a) of the covering element (120) extends substantially horizontally when the rear-view device (200) is mounted to the vehicle (300),
∘ the first arm (120a) of the covering element (120) is disposed behind the housing (102) and the second arm (120b) of the covering element (120) is configured to face outside the lighting device (100), and
∘ the second arm (120b) of the covering element (120) has an extended portion (120c) for supporting the covering element (120) within the housing (102).

2. The lighting device (100) according to claim 1, wherein
the reflective element (118) is disposed on a structural element (116) of the housing (102) and/or on a back side of the lightguide (108) facing away from at least one light emitting surface (112, 114).

3. The lighting device (100) according to any one of the preceding claims, wherein
the at least one light source (106) is configured at the first arm (108a) of the at least one lightguide (108), at the at least one light receiving surface (110) of the at least one lightguide (108) being substantially perpendicular to the first light emitting surface (112) and/or the second light emitting surface (114).

4. The lighting device (100) according to any one of the preceding claims, wherein
the at least one lightguide (108) has a square or rectangular cross section, when the covering element (120) has the first arm (120a) and the second arm (120b) connected to the first arm (120a) at the angle (Q) forming the substantially 7-shaped cross section and defining the recess, or
the at least one lightguide (108) is arranged behind a further covering element (120), when the at least one lightguide (108) has the first arm (108a) and the second arm (108b) connected to the first arm (108a) at the angle (P) forming the substantially 7-shaped cross section and defining the recess.

5. The lighting device (100) according to any one of the preceding claims, wherein
the housing (102) further comprises a lightguide supporting element (116) for replaceably mounting the at least one lightguide (108) within the housing (102).

6. The lighting device (100) according to claim 5, wherein
the at least one lightguide (108) is arranged between
• on the one side the upper portion (102a) of the housing (102) and/or the covering element or the further covering element (120) and
• on the other side the supporting element (116).

7. The lighting device (100) according to any one of the preceding claims, wherein
the reflective element (118) comprises or is provided with a pattern generating element (122) for emitting light in the form of a pattern, logo, symbol, icon, text or combination thereof, and/or
the covering element or the further covering element (120) comprises or is provided with a pattern generating element (122) for emitting light in the form of a pattern, logo, symbol, icon, text or combination thereof.

8. The lighting device (100) according to claim 7, wherein
the pattern generating element (122) comprises at least one of a laser printed portion, a cut-out, a masked portion, molded, etched, painted or printed 2D or 3D shapes for making a pattern, logo, symbol, icon or text.

9. The lighting device (100) according to any one of the preceding claims, wherein
the at least one light source (106) comprises a colour changing light source and/or cooperates with a colour changing element, and/ or
the at least one light source (106) is switchable between an on and an off state.

10. A rear-view device (200) comprising at least one lighting device (100) according to any one of the preceding claims.

11. The rear-view device (200) according to claim 10, further comprising
a control unit for controlling the lighting device.

12. A vehicle (300) comprising at least one rear-view device (200) according to claim 10 or 11.

## Patentansprüche

1. Beleuchtungsvorrichtung (100) für eine Rückblickvorrichtung (200) eines Fahrzeugs (300), umfassend:
• ein Gehäuse (102) mit einem oberen Abschnitt (102a) und einem unteren Abschnitt (102b), insbesondere aus opakem Material hergestellt;
• mindestens eine Lichtquelle (106), die innerhalb des Gehäuses (102) angeordnet ist;
• mindestens einen Lichtleiter (108), der zumindest teilweise innerhalb des Gehäuses (102) angeordnet ist und ein erstes Ende (108c) und ein zweites Ende (108d) aufweist, wobei sich die mindestens eine Lichtquelle (106) an dem ersten Ende (108c) und/oder dem zweiten Ende (108d) des mindestens einen Lichtleiters (108) befindet und wobei der mindestens eine Lichtleiter (108) dazu ausgestaltet ist, Licht von dem ersten Ende (108c) zu dem zweiten Ende (108d) des mindestens einen Lichtleiters (108) zu übertragen, und wobei der mindestens eine Lichtleiter (108) mindestens eine Lichtempfangsfläche (110) und mindestens eine Lichtemissionsfläche (112, 114) aufweist; und
• ein reflektierendes Element (118), das an mindestens einem Abschnitt des mindestens einen Gehäuses (102) und dem mindestens einen Lichtleiter (108) angeordnet ist, um einen Teil des Lichts von dem mindestens einen Lichtleiter (108) zu reflektieren,
wobei
• entweder der mindestens eine Lichtleiter (108) einen ersten Arm (108a) und einen zweiten Arm (108b), der mit dem ersten Arm (108a) in einem Winkel (P) verbunden ist, durch den ein im Wesentlichen 7-förmiger Querschnitt ausgebildet und eine Aussparung definiert wird, aufweist, wobei
∘ der erste Arm (108a) des mindestens einen Lichtleiters (108) sich im Wesentlichen horizontal erstreckt, wenn die Rückblickvorrichtung (200) an dem Fahrzeug (300) montiert ist.
∘ der erste Arm (108a) und der zweite Arm (108b) des mindestens einen Lichtleiters (108) dazu ausgestaltet sind, dem Äußeren der Beleuchtungsvorrichtung (100) zugewandt zu sein, derart, dass
▪ der erste Arm (108a) des mindestens einen Lichtleiters (108) dazu ausgestaltet ist, Licht direkt in Richtung der Außenseite der Beleuchtungsvorrichtung (100), durch Bereitstellen einer ersten Lichtemissionsfläche (112), und in Richtung des reflektierenden Elements (118), durch Bereitstellen einer zweiten Lichtemissionsfläche (114), zu emittieren, und
▪ der zweite Arm (108b) dazu ausgestaltet ist, von dem reflektierenden Element (118) reflektiertes Licht hindurchgehen zu lassen,
• oder ein Abdeckelement (120), das zwischen dem oberen Abschnitt (102a) und dem unteren Abschnitt (102b) des Gehäuses (102) angeordnet ist, um den Austritt des von dem zumindest einen Lichtleiter (108) kommenden Lichts aus der Beleuchtungsvorrichtung (100) zu ermöglichen, einen ersten Arm (120a) und einen zweiten Arm (120b), der mit dem ersten Arm (120a) in einem Winkel (Q) verbunden ist, durch den ein im Wesentlichen 7-förmiger Querschnitt ausgebildet und eine Aussparung definiert wird, aufweist, wobei
∘ der erste Arm (120a) des Abdeckelements (120) sich im Wesentlichen horizontal erstreckt, wenn die Rückblickvorrichtung (200) an dem Fahrzeug (300) montiert ist.
∘ der erste Arm (120a) des Abdeckelements (120) hinter dem Gehäuse (102) angeordnet ist und der zweite Arm (120b) des Abdeckelements (120) dazu ausgestaltet ist, dem Äußeren der Beleuchtungsvorrichtung (100) zugewandt zu sein, und
∘ der zweite Arm (120b) des Abdeckelements (120) einen verlängerten Abschnitt (120c) aufweist, um das Abdeckelement (120) innerhalb des Gehäuses (102) zu stützen.

2. Beleuchtungsvorrichtung (100) nach Anspruch 1, wobei
das reflektierende Element (118) an einem Strukturelement (116) des Gehäuses (102) und/oder an einer von mindestens einer Lichtemissionsfläche (112, 114) abgewandten Rückseite des Lichtleiters (108) angeordnet ist.

3. Beleuchtungsvorrichtung (100) nach einem der vorhergehenden Ansprüche, wobei
die mindestens eine Lichtquelle (106) an dem ersten Arm (108a) des mindestens einen Lichtleiters (108) ausgestaltet ist, an der zumindest einen Lichtempfangsfläche (110) des mindestens einen Lichtleiters (108), die im Wesentlichen senkrecht zu der ersten Lichtemissionsfläche (112) und/oder der zweiten Lichtemissionsfläche (114) steht.

4. Beleuchtungsvorrichtung (100) nach einem der vorhergehenden Ansprüche, wobei
der mindestens eine Lichtleiter (108) einen quadratischen oder rechteckigen Querschnitt aufweist, wenn das Abdeckelement (120) den ersten Arm (120a) und den zweiten Arm (120b), der mit dem ersten Arm (120a) in dem Winkel (Q) verbunden ist, durch den der im Wesentlichen 7-förmige Querschnitt ausgebildet und die Aussparung definiert wird, aufweist, oder
der mindestens eine Lichtleiter (108) hinter einem weiteren Abdeckelement (120) angeordnet ist, wenn der mindestens eine Lichtleiter (108) den ersten Arm (108a) und den zweiten Arm (108b), der mit dem ersten Arm (108a) in dem Winkel (P) verbunden ist, durch den der im Wesentlichen 7-förmige Querschnitt ausgebildet und die Aussparung definiert wird, aufweist.

5. Beleuchtungsvorrichtung (100) nach einem der vorhergehenden Ansprüche, wobei das Gehäuse (102) ferner ein Lichtleiterstützelement (116) umfasst, um den mindestens einen Lichtleiter (108) innerhalb des Gehäuses (102) austauschbar zu montieren.

6. Beleuchtungsvorrichtung (100) nach Anspruch 5, wobei
der mindestens eine Lichtleiter (108) angeordnet ist zwischen
• einerseits dem oberen Abschnitt (102a) des Gehäuses (102) und/oder dem Abdeckelement oder dem weiteren Abdeckelement (120) und
• andererseits dem Stützelement (116).

7. Beleuchtungsvorrichtung (100) nach einem der vorhergehenden Ansprüche, wobei das reflektierende Element (118) ein mustererzeugendes Element (122) umfasst oder mit einem solchen versehen ist, um Licht in Form eines Musters, Logos, Symbols, Icons, Textes oder einer Kombination davon zu emittieren, und/oder
das Abdeckelement oder das weitere Abdeckelement (120) ein mustererzeugendes Element (122) umfasst oder mit einem solchen versehen ist, um Licht in Form eines Musters, Logos, Symbols, Icons, Textes oder einer Kombination davon zu emittieren.

8. Beleuchtungsvorrichtung (100) nach Anspruch 7, wobei
das mustererzeugende Element (122) mindestens einen lasergedruckten Abschnitt, einen Ausschnitt, einen verdeckten Abschnitt und/oder geformte, geätzte, gemalte oder gedruckte 2D- oder 3D-Formen zur Herstellung eines Musters, Logos, Symbols, Icons oder Textes umfasst.

9. Beleuchtungsvorrichtung (100) nach einem der vorhergehenden Ansprüche, wobei die mindestens eine Lichtquelle (106) eine Farbwechsellichtquelle umfasst und/oder mit einem Farbwechselelement zusammenwirkt und/oder
die mindestens eine Lichtquelle (106) zwischen einem Ein- und einem Aus-Zustand umschaltbar ist.

10. Rückblickvorrichtung (200), die mindestens eine Beleuchtungsvorrichtung (100) nach einem der vorhergehenden Ansprüche umfasst.

11. Rückblickvorrichtung (200) nach Anspruch 10, ferner umfassend eine Steuereinheit zur Steuerung der Beleuchtungsvorrichtung.

12. Fahrzeug (300), das mindestens eine Rückblickvorrichtung (200) nach Anspruch 10 oder 11 umfasst.

## Revendications

1. Dispositif d'éclairage (100) pour un dispositif de rétroviseur (200) d'un véhicule (300), comprenant :
• un boîtier (102) présentant une partie supérieure (102a) et une partie inférieure (102b), constitué notamment d'un matériau opaque ;
• au moins une source de lumière (106) disposée à l'intérieur du boîtier (102) ;
• au moins un guide de lumière (108) disposé au moins partiellement à l'intérieur du boîtier (102) et présentant une première extrémité (108c) et une seconde extrémité (108d), dans lequel ladite au moins une source de lumière (106) est située au niveau de la première extrémité (108c) et/ou de la seconde extrémité (108d) dudit au moins un guide de lumière (108), et dans lequel ledit au moins un guide de lumière (108) est conçu pour transmettre la lumière de la première extrémité (108c) à la seconde extrémité (108d) dudit au moins un guide de lumière (108), et dans lequel ledit au moins un guide de lumière (108) présente au moins une surface de réception de lumière (110) et au moins une surface d'émission de lumière (112, 114) ; et
• un élément réfléchissant (118) disposé sur au moins une partie du boîtier (102) et dudit au moins un guide de lumière (108) pour réfléchir une partie de la lumière provenant dudit au moins un guide de lumière (108),
dans lequel
• soit ledit au moins un guide de lumière (108) présente un premier bras (108a) et un second bras (108b) relié au premier bras (108a) selon un angle (P), formant une section transversale sensiblement en forme de 7 et définissant un renfoncement, dans lequel
∘ le premier bras (108a) dudit au moins un guide de lumière (108) s'étend sensiblement de manière horizontale lorsque le dispositif de rétroviseur (200) est monté sur le véhicule (300), et
∘ le premier bras (108a) et le second bras (108b) dudit au moins un guide de lumière (108) sont conçus pour être orientés vers l'extérieur du dispositif d'éclairage (100), de telle sorte que
▪ le premier bras (108a) dudit au moins un guide de lumière (108) est conçu pour émettre de la lumière directement vers l'extérieur du dispositif d'éclairage (100) grâce à une première surface d'émission de lumière (112), et vers l'élément réfléchissant (118) grâce à une seconde surface d'émission de lumière (114), et
▪ le second bras (108b) est conçu pour permettre à la lumière réfléchie par l'élément réfléchissant (118) de traverser
• soit un élément de recouvrement (120), disposé entre la partie supérieure (102a) et la partie inférieure (102b) du boîtier (102) pour permettre à la lumière provenant dudit au moins un guide de lumière (108) de sortir du dispositif d'éclairage (100), présente un premier bras (120a) et un second bras (120b) relié au premier bras (120a) selon un angle (Q), formant une section transversale sensiblement en forme de 7 et définissant un renfoncement, dans lequel
∘ le premier bras (120a) de l'élément de recouvrement (120) s'étend sensiblement de manière horizontale lorsque le dispositif de rétroviseur (200) est monté sur le véhicule (300),
∘ le premier bras (120a) de l'élément de recouvrement (120) est disposé derrière le boîtier (102) et le second bras (120b) de l'élément de recouvrement (120) est conçu pour être orienté vers l'extérieur du dispositif d'éclairage (100), et
∘ le second bras (120b) de l'élément de recouvrement (120) présente une partie prolongée (120c) destinée à soutenir l'élément de recouvrement (120) à l'intérieur du boîtier (102).

2. Dispositif d'éclairage (100) selon la revendication 1, dans lequel
l'élément réfléchissant (118) est disposé sur un élément structurel (116) du boîtier (102) et/ou sur une face arrière du guide de lumière (108) orienté à l'opposé d'au moins une surface d'émission de lumière (112, 114).

3. Dispositif d'éclairage (100) selon l'une quelconque des revendications précédentes, dans lequel
ladite au moins une source de lumière (106) est conçue au niveau du premier bras (108a) dudit au moins un guide de lumière (108), au niveau de ladite au moins une surface de réception de lumière (110) dudit au moins un guide de lumière (108) étant sensiblement perpendiculaire à la première surface d'émission de lumière (112) et/ou à la seconde surface d'émission de lumière (114).

4. Dispositif d'éclairage (100) selon l'une quelconque des revendications précédentes, dans lequel
ledit au moins un guide de lumière (108) présente une section transversale carrée ou rectangulaire, lorsque l'élément de recouvrement (120) présente le premier bras (120a) et le second bras (120b) relié au premier bras (120a) selon un angle (Q), formant la section transversale sensiblement en forme de 7 et définissant le renfoncement, ou
ledit au moins un guide de lumière (108) est disposé derrière un autre élément de recouvrement (120), lorsque ledit au moins un guide de lumière (108) présente le premier bras (108a) et le second bras (108b) relié au premier bras (108a) selon un angle (P), formant la section transversale sensiblement en forme de 7 et définissant le renfoncement.

5. Dispositif d'éclairage (100) selon l'une quelconque des revendications précédentes, dans lequel le boîtier (102) comprend en outre un élément de support de guide de lumière (116) destiné à monter de manière remplaçable ledit au moins un guide de lumière (108) à l'intérieur du boîtier (102).

6. Dispositif d'éclairage (100) selon la revendication 5, dans lequel
ledit au moins un guide de lumière (108) est disposé entre
• d'un côté, la partie supérieure (102a) du boîtier (102) et/ou l'élément de recouvrement ou l'autre élément de recouvrement (120) et
• de l'autre côté, l'élément de support (116).

7. Dispositif d'éclairage (100) selon l'une quelconque des revendications précédentes, dans lequel l'élément réfléchissant (118) comprend ou est muni d'un élément générateur de motifs (122) destiné à émettre de la lumière sous la forme d'un motif, d'un logo, d'un symbole, d'une icône, d'un texte ou d'une combinaison de ceux-ci, et/ou
l'élément de recouvrement ou l'autre élément de recouvrement (120) comprend ou est muni d'un élément générateur de motifs (122) destiné à émettre de la lumière sous la forme d'un motif, d'un logo, d'un symbole, d'une icône, d'un texte ou d'une combinaison de ceux-ci.

8. Dispositif d'éclairage (100) selon la revendication 7, dans lequel
l'élément générateur de motif (122) comprend au moins l'un des éléments suivants : une partie imprimée au laser, une découpe, une partie masquée, des formes en 2D ou 3D moulées, gravées, peintes ou imprimées, destinées à former un motif, un logo, un symbole, une icône ou un texte.

9. Dispositif d'éclairage (100) selon l'une quelconque des revendications précédentes, dans lequel ladite au moins une source de lumière (106) comprend une source de lumière à changement de couleur et/ou coopère avec un élément à changement de couleur, et/ou ladite au moins une source de lumière (106) peut être commutée entre un état allumé et un état éteint.

10. Dispositif de rétroviseur (200) comprenant au moins un dispositif d'éclairage (100) selon l'une quelconque des revendications précédentes.

11. Dispositif de rétroviseur (200) selon la revendication 10, comprenant en outre une unité de commande destinée à commander le dispositif d'éclairage.

12. Véhicule (300) comprenant au moins un dispositif de rétroviseur (200) selon la revendication 10 ou 11.
